# FASCICULE DE BREVET EUROPEEN

(11) **EP 2 157 511 B1**
(45) Date de publication et mention de la délivrance du brevet: **18.01.2012**
(21) Numéro de dépôt: 09009086.1
(22) Date de dépôt: 13.07.2009
(51) Int. Cl.: G06F 9/48

(54) **Procédé d'acheminement d'un signal d'interruption directement vers une unité de traitement virtuelle dans un système à une ou plusieurs unités de traitement physiques**
Weiterleitungsverfahren eines Unterbrechungssignals direkt an eine virtuelle Bearbeitungseinheit in einem System mit einer oder mehreren physischen Bearbeitungseinheiten
Method for directly routing an interrupt signal to a virtual processing unit in a system with one or several physical processing units

(30) Priorité: 19.08.2008 FR 0804621
(43) Date de publication de la demande: 24.02.2010
(73) Titulaire: STMicroelectronics Rousset SAS, 13790 Rousset (FR)
(72) Inventeur: Schwarz, Christian, 13790 Rousset (FR); Porquet, Joel, 13100 Aix En Provence (FR)
(74) Mandataire: de Roquemaurel, Bruno

(56) Documents cités:
- US-A- 5 918 057
- US-A1- 2003 182 484
- US-A1- 2004 073 910

## Description

La présente invention concerne les systèmes de traitement de données à une ou plusieurs unités de traitement interconnectées en réseau, et notamment les systèmes intégrés dans une puce ou microplaquette de semi-conducteur SoC (System on Chip) et les systèmes comportant un réseau intégré NoC (Network on Chip) interconnectant des unités de traitement et des unités périphériques. La présente invention concerne plus particulièrement l'acheminement des interruptions dans un tel système.

La présente invention s'applique notamment aux boîtiers décodeurs vidéo (set top box) comportant une puce intégrant plusieurs unités de traitement,.

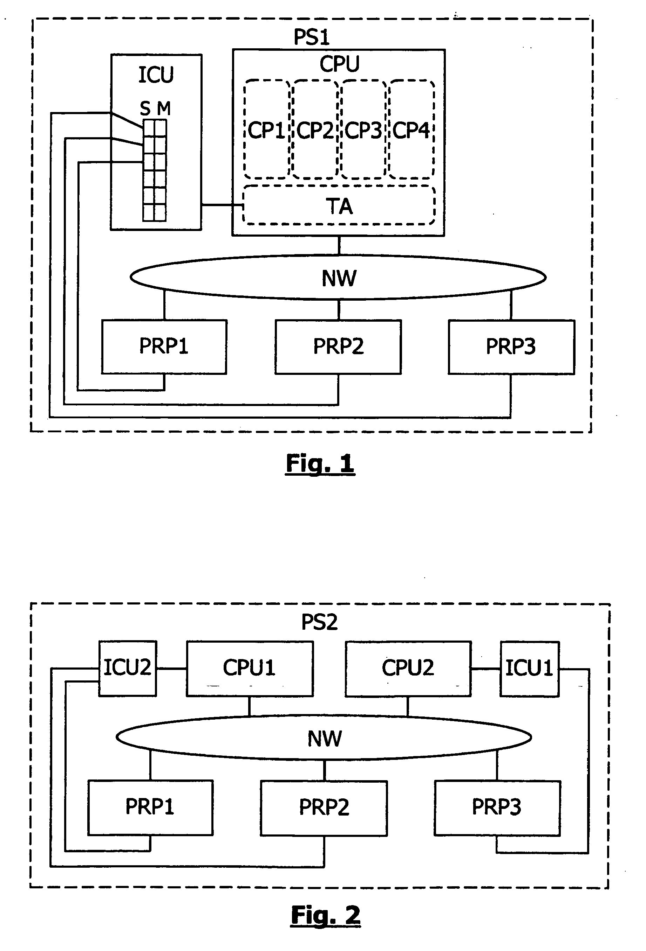

La figure 1 représente schématiquement un système de traitement de données intégré auquel l'invention peut s'appliquer. Sur la figure 1, le système PS1 comprend une unité centrale de traitement physique CPU, plusieurs unités périphériques PRP1, PRP2, PRP3, et un réseau d'interconnexion NW reliant l'unité centrale de traitement aux unités périphériques. Le système comprend également une unité de contrôle d'interruption ICU connectée à l'unité CPU et aux unités PRP1-PRP3, pour gérer et acheminer vers l'unité CPU les signaux d'interruption provenant des unités PRP1-PRP3. Les unités périphériques PRP1-PRP3 peuvent comprendre par exemple des mémoires, des unités d'interface avec des mémoires externes, et des ports d'entrée/sortie.

L'unité ICU comprend notamment un registre de signal d'interruption S mémorisant l'état actif/inactif des interruptions, et un registre de masque d'interruption M mémorisant un état masqué/non masqué de chacune des interruptions mémorisées dans le registre S.

L'unité CPU peut exécuter en temps partagé plusieurs applications indépendantes ou systèmes d'exploitation CP1, CP2, CP3, CP4, appelés dans ce qui suit "machine" ou "unité de traitement virtuelle". D'une manière générale, une unité virtuelle désigne un élément logiciel capable de fonctionner de manière native et autonome sur un ou plusieurs processeurs. A cet effet, l'unité CPU exécute un agent de confiance TA qui assure la fonction d'"hyperviseur" (hypervisor) pour permettre l'exécution de plusieurs unités virtuelles, par exemple dans un contexte de virtualisation. L'agent TA gère ainsi l'activation et la désactivation des unités virtuelles, par exemple en fonction de niveaux de priorités et de droits d'accès de celles-ci aux ressources du système. L'agent TA assure également l'acheminement de chaque interruption signalée par l'unité ICU vers l'unité virtuelle CP1-CP4 spécifiée comme étant destinatrice de l'interruption.

A chaque apparition d'une interruption, l'unité ICU active l'agent TA exécuté par l'unité CPU, ce qui est coûteux en ressource de traitement de l'unité CPU. Si l'interruption était masquée par l'unité virtuelle CP1-CP4 destinatrice de l'interruption, l'agent TA aura été activé inutilement. Il en est de même si l'unité virtuelle destinatrice de l'interruption était inactive au moment de l'arrivée de l'interruption, une autre unité virtuelle plus prioritaire étant en cours d'exécution. Si l'unité virtuelle destinatrice de l'interruption est activée au détriment d'une autre unité virtuelle en cours d'exécution, l'unité virtuelle activée peut présenter une priorité moins élevée que l'unité virtuelle qui était en cours d'exécution.

Par ailleurs, l'activation d'une unité virtuelle CP1-CP4 implique généralement la mémorisation d'un contexte d'exécution d'une autre unité virtuelle CP1-CP4 en cours d'exécution et à désactiver, et le chargement du contexte de l'unité virtuelle à activer, ces opérations pouvant être coûteuses en temps d'exécution.

La figure 2 représente un système de traitement PS2 comprenant plusieurs unités de traitement physiques CPU1, CPU2 reliées entre elles et aux unités périphériques PRP1, PRP2, PRP3 par l'intermédiaire du réseau NW. Chaque unité de traitement CPU1, CPU2 est connectée à une unité de contrôle d'interruption ICU1, ICU2 respective qui peut être identique à l'unité ICU représentée sur la figure 1. Chaque unité de traitement CPU1, CPU2 exécute un agent de confiance ou hyperviseur qui est spécifique à chaque unité de traitement pour des raisons de sécurité et/ou parce que certaines des unités de traitement sont spécialisées pour effectuer des traitements particuliers plus efficacement, et/ou parce que certaines unités de traitement spécialisées ne peuvent pas mettre en oeuvre plusieurs unités virtuelles.

L'unité ICU1 reçoit les interruptions des unités périphériques PRP1 et PRP2, et l'unité ICU2 reçoit les interruptions de l'unité périphérique PRP3. Ainsi, l'acheminement des interruptions provenant des unités PRP1-PRP3 est déterminé par les connexions entre les unités ICU1 et ICU2 d'une part, et d'autre part, les unités périphériques. L'architecture ainsi présentée sur la figure 2 présente l'inconvénient de manquer de souplesse quant à l'acheminement des interruptions provenant des unités périphériques PRP1-PRP3 vers l'une ou l'autre des unités de traitement CPU1, CPU2. Si l'un des agents TA des unités CPU1, CPU2 est configuré pour être l'agent principal du système, il est nécessaire de mettre en oeuvre des communications entre l'agent principal et les autres agents TA. Cette solution s'avère donc coûteuse en termes de logiciel et de performance.

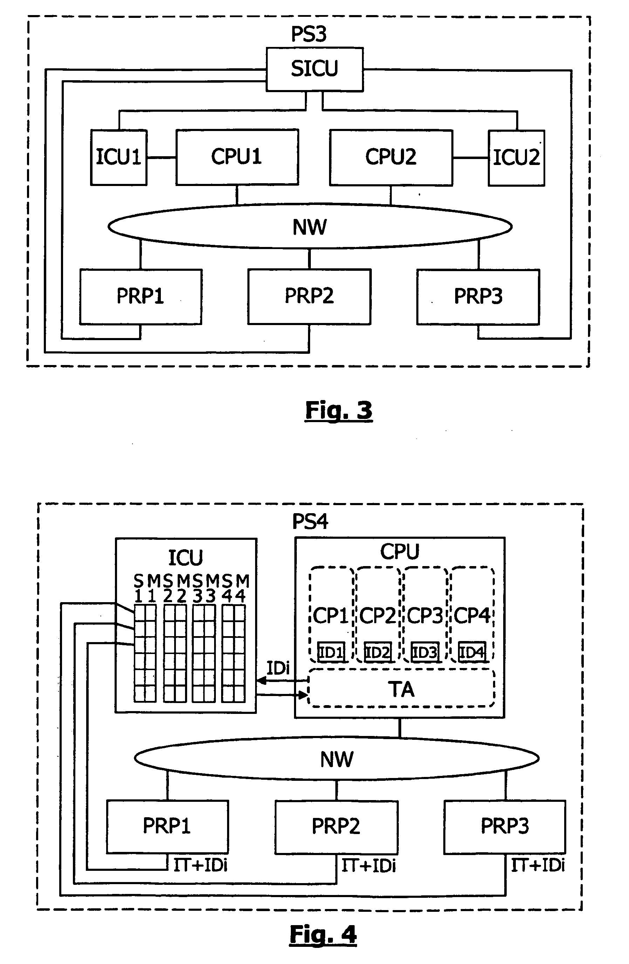

Il peut être remédié à ce manque de souplesse par l'architecture de système présentée sur la figure 3. Ainsi, la figure 3 représente un système de traitement PS3 comprenant également des unités de traitement CPU1, CPU2 associées chacune à une unité de contrôle d'interruption ICU1, ICU2, et des unités périphériques PRP1-PRP3. Pour permettre à chaque interruption provenant de l'une ou l'autre des unités PRP1-PRP3 d'être acheminée vers l'une ou l'autre des unités CPU1, CPU2, le système PS3 comprend en outre un réseau dédié à la transmission des interruptions comprenant une unité de contrôle d'interruption partagée et configurable SICU interconnectée entre, d'une part, les deux unités ICU1 et ICU2, et d'autre part, les unités PRP1-PRP3. Ainsi, par configuration de l'unité SICU, une interruption provenant de n'importe quelle unité PRP1-PRP3 peut être acheminée vers l'une ou l'autre des unités CPU1 et CPU2. Toutefois, l'architecture présentée sur la figure 3 nécessite des circuits supplémentaires notamment pour réaliser l'unité SICU, et des communications supplémentaires pour permettre la configuration de l'unité SICU. Cette architecture pose également un problème de sécurité si tous les agents TA des unités CPU1, CPU2 peuvent configurer l'unité SICU, ou nécessite la mise en oeuvre d'un agent principal et des communications supplémentaires entre les agents distribués sur les unités CPU1, CPU2 et l'agent principal.

Il est donc souhaitable d'améliorer le traitement et l'acheminement d'interruptions provenant d'unités périphériques dans un système de traitement intégré comprenant plusieurs unités de traitement virtuelles mises en oeuvre par une ou plusieurs unités de traitement physiques. Ainsi, dans un système multiprocesseur à plusieurs unités de traitement physiques, il est souhaitable de pouvoir exécuter une unité de traitement virtuelle indifféremment sur l'une ou l'autre des unités de traitement physiques. A cet effet, il est souhaitable de pouvoir acheminer une interruption vers une unité de traitement virtuelle, indépendamment de l'unité de traitement physique exécutant l'unité de traitement virtuelle.

Dans un tel système, il est également souhaitable de pouvoir acheminer les interruptions en limitant les accès à l'hyperviseur très coûteux en temps d'exécution. Il est également souhaitable de réduire la complexité des circuits et des programmes nécessaires à la gestion et l'acheminement des interruptions.

Dans un mode de réalisation, il est prévu un procédé de traitement d'une interruption comprenant des étapes de : émission d'une interruption par une unité périphérique, l'interruption étant destinée à une unité virtuelle parmi plusieurs unités virtuelles exécutées par une unité de traitement physique, transmission de l'interruption à une unité de contrôle d'interruption couplée à l'unité de traitement, et mémorisation de l'interruption par l'unité de contrôle d'interruption dans un registre d'interruption. Selon un mode de réalisation, l'interruption est transmise à l'unité de contrôle d'interruption en association avec un identifiant de l'unité virtuelle destinatrice de l'interruption, le registre d'interruption étant associé à l'identifiant et appartenant à un ensemble de registres comprenant un registre d'interruption par identifiant d'unité virtuelle susceptible d'être exécutée par l'unité de traitement physique, l'interruption étant transmise à l'unité de traitement si l'unité virtuelle destinatrice de l'interruption est en cours d'exécution par l'unité de traitement physique.

Selon un mode de réalisation, la transmission de l'interruption vers l'unité de contrôle d'interruption est effectuée par l'intermédiaire d'un réseau transmettant des données sous forme de paquets entre l'unité de traitement physique et les unités périphériques, dans un paquet contenant un identifiant de l'interruption et un identifiant d'unité virtuelle, qui est transmis avec une qualité de service maximum.

Selon un mode de réalisation, l'interruption est transmise à l'unité de traitement physique si elle n'est pas masquée par un registre de masque d'interruption associé au registre d'interruption de l'unité virtuelle destinatrice de l'interruption.

Selon un mode de réalisation, l'interruption est transmise à l'unité de traitement physique si l'unité virtuelle destinatrice de l'interruption n'est pas en cours d'exécution par l'unité de traitement physique, mais si le nombre d'interruptions mémorisées dans le registre d'interruption associé à l'unité virtuelle destinatrice dépasse un certain seuil.

Selon un mode de réalisation, l'interruption est transmise à l'unité de traitement physique si l'unité virtuelle destinatrice de l'interruption n'est pas en cours d'exécution par l'unité de traitement physique, mais si une priorité attribuée à l'interruption dépasse un certain seuil.

Selon un mode de réalisation, la transmission de l'interruption à une unité de contrôle d'interruption couplée à une unité de traitement physique, comprend des étapes de détermination de l'unité de traitement physique où est exécutée l'unité virtuelle destinatrice de l'interruption, parmi plusieurs unités de traitement physiques, en fonction de l'identifiant d'unité virtuelle transmis en association avec l'interruption, l'interruption étant transmise à une unité de contrôle d'interruption couplée à l'unité de traitement physique déterminée.

Selon un mode de réalisation, le procédé comprend des étapes de notification par l'unité de traitement physique à l'unité de contrôle d'interruption qu'une unité virtuelle a été activée, et de fourniture par l'unité de contrôle d'interruption à l'unité de traitement physique des interruptions mémorisées dans le registre d'interruption pour l'unité virtuelle activée.

Dans un mode de réalisation, il est également prévu un système de traitement de données comprenant une unité de traitement physique couplée à une unité de contrôle d'interruption, et des unités périphériques reliées à l'unité de traitement physique par un réseau de transmission, les unités périphériques étant configurées pour envoyer à l'unité de contrôle d'interruption, une interruption destinée à une unité virtuelle parmi plusieurs unités virtuelles exécutées par l'unité de traitement physique, l'unité de contrôle d'interruption étant configurée pour mémoriser chaque interruption reçue dans un registre d'interruption, et pour transmettre chaque interruption reçue à l'unité de traitement physique. Selon un mode de réalisation, l'unité de contrôle d'interruption est configurée pour : recevoir des interruptions en association avec un identifiant d'unité virtuelle destinatrice de l'interruption, mémoriser chaque interruption reçue dans un registre d'interruption correspondant à l'identifiant associé et appartenant à un ensemble de registres comprenant un registre d'interruption par unité virtuelle susceptible d'être exécutée par l'unité de traitement physique, et transmettre chaque interruption à l'unité de traitement physique si l'unité virtuelle destinatrice de l'interruption est en cours d'exécution par l'unité de traitement physique.

Selon un mode de réalisation, le réseau est configuré pour transmettre des données sous forme de paquets avec une qualité de service ajustable, l'unité de contrôle d'interruption étant configurée pour recevoir chaque interruption dans un paquet contenant un identifiant de l'interruption et un identifiant d'unité virtuelles, transmis par le réseau avec une qualité de service maximum.

Selon un mode de réalisation, l'unité de contrôle d'interruption est configurée pour transmettre une interruption à l'unité de traitement physique si elle n'est pas masquée par un registre de masque d'interruption associé au registre d'interruption de l'unité virtuelle destinatrice de l'interruption.

Selon un mode de réalisation, l'unité de contrôle d'interruption est configurée pour transmettre une interruption à l'unité de traitement physique si l'unité virtuelle destinatrice de l'interruption n'est pas en cours d'exécution par l'unité de traitement physique, mais si le nombre d'interruptions mémorisées dans le registre d'interruption associé à l'unité virtuelle destinatrice dépasse un certain seuil.

Selon un mode de réalisation, l'unité de contrôle d'interruption est configurée pour transmettre une interruption à l'unité de traitement physique si l'unité virtuelle destinatrice de l'interruption n'est pas en cours d'exécution par l'unité de traitement physique, mais si une priorité attribuée à l'interruption dépasse un certain seuil.

Selon un mode de réalisation, le système comprend plusieurs unités de traitement physiques couplées chacune à une unité de contrôle d'interruption, le réseau étant configuré pour acheminer une interruption vers l'unité de contrôle d'interruption en fonction de l'identifiant d'unité virtuelle transmis en association avec l'interruption.

Selon un mode de réalisation, chaque unité de traitement est configurée pour notifier l'activation d'une unité virtuelle à l'unité de contrôle d'interruption à laquelle elle est couplée.

Des exemples de réalisation de l'invention seront décrits dans ce qui suit, à titre non limitatif en relation avec les figures jointes parmi lesquelles :
- les figures 1 à 3 précédemment décrites représentent schématiquement des systèmes de traitement de données, selon l'art antérieur,
- la figure 4 représente schématiquement un système de traitement de données, selon un premier mode de réalisation,
- la figure 5 représente schématiquement un système de traitement de données, selon un second mode de réalisation,
- la figure 6 représente schématiquement un système de traitement de données, selon un troisième mode de réalisation,
- la figure 7 représente schématiquement un système de traitement de données, selon un quatrième mode de réalisation,
- la figure 8 représente schématiquement un système de traitement de données, selon un cinquième mode de réalisation.

La figure 4 représente schématiquement un système de traitement de données intégré. Sur la figure 4, le système PS4 comprend une unité centrale de traitement physique CPU, plusieurs unités périphériques PRP1, PRP2, PRP3, et un réseau d'interconnexion NW, reliant l'unité CPU aux unités PRP1-PRP3. Le système PS4 comprend également une unité de contrôle d'interruption ICU connectée à l'unité CPU et aux unités PRP1-PRP3, pour gérer et acheminer vers des entrées d'interruption de l'unité CPU les signaux d'interruption provenant des unités PRP1-PRP3. Les unités périphériques PRP1-PRP3 peuvent comprendre par exemple des mémoires, des unités d'interface avec des mémoires externes, et des ports d'entrée/sortie.

L'unité CPU peut exécuter en temps partagé plusieurs unités de traitement virtuelles CP1-CP4, par exemple dans un contexte de virtualisation. Des droits d'accès spécifiques aux ressources (mémoire, accès externes) du système peuvent être attribués à chaque unité virtuelle CP1-CP4. A cet effet, l'unité CPU exécute un agent de confiance TA qui assure la fonction d'"hyperviseur" pour attribuer les ressources de calcul de l'unité CPU à chaque unité virtuelle CP1-CP4, par exemple selon un planning d'ordonnancement, ou en fonction de niveaux de priorité. L'agent TA gère également des droits d'accès des unités virtuelles CP1-CP4 aux ressources du système, ainsi que l'acheminement de chaque interruption signalée par l'unité ICU, vers l'unité virtuelle spécifiée comme étant destinatrice de l'interruption. L'agent TA peut également assurer pour les unités virtuelles la mise en oeuvre de plusieurs systèmes d'exploitation sur l'unité de traitement CPU.

Dans un mode de réalisation, l'unité ICU comprend pour chaque unité virtuelle CP1-CP4, un registre d'interruption S1-S4, et un registre de masque d'interruption M1-M4. Chaque registre S1-S4 mémorise l'état actif/inactif des interruptions pour l'unité virtuelle correspondante. Chaque registre de masquage M1-M4 mémorise un état masqué/non masqué de chacune des interruptions mémorisées dans le registre S1-S4 de l'unité virtuelle correspondante. Par ailleurs, les unités périphériques PRP1-PRP3 sont configurées et connectées à l'unité ICU pour transmettre avec chaque interruption IT un identifiant ID1-ID4 de l'unité de traitement virtuelle CP1-CP4 destinatrice de l'interruption. A cet effet, l'identifiant d'unité virtuelle a été préalablement transmis par l'unité virtuelle à l'unité périphérique lors d'une phase de configuration de l'unité périphérique par l'unité virtuelle. A la suite de la réception d'une interruption, l'unité ICU sélectionne l'un des registres S1-S4 et l'un des registres M1-M4 correspondant, à mettre à jour en fonction de l'identifiant IDi d'unité virtuelle associé à l'interruption reçue, et met à jour la cellule mémoire du registre S1-S4 sélectionné, correspondant au signal d'interruption. A un instant donné, seul est actif l'un des registres S1-S4 correspondant à l'unité virtuelle CP1-CP4 en cours d'exécution par l'unité CPU. Si une interruption est levée dans un registre S1-S4 d'une unité virtuelle non active, celle-ci reste en attente de traitement jusqu'à ce que l'unité ICU soit avertie par l'unité CPU que l'unité virtuelle correspondante à été activée. Si l'interruption concerne au contraire l'unité virtuelle active et n'est pas masquée comme indiqué par le registre M1-M4 correspondant, l'unité ICU signale immédiatement l'interruption à l'unité de traitement CPU.

Si l'agent TA active une autre des unités virtuelles CP1-CP4, il en informe l'unité ICU en lui transmettant l'identifiant ID1-ID4 de l'unité virtuelle activée. L'unité ICU active alors le registre S1-S4 et le registre M1-M4 correspondants à la nouvelle unité virtuelle CP1-CP4 activée, et fournit à l'unité CPU toutes les interruptions non masquées, en attente pour l'unité virtuelle activée.

Les identifiants ID1-ID4 des unités virtuelles CP1-CP4 peuvent être attribués par l'agent TA qui peut ainsi créer de nouvelles unités virtuelles ou en supprimer. Un identifiant peut également être attribué à l'agent TA notamment pour qu'il puisse être destinataire d'interruptions.

Le réseau NW comprend des moyens pour transporter les identifiants d'unité virtuelle ID1-ID4 qui sont attribués par l'agent TA. Lorsque l'agent TA active une unité virtuelle, il fournit l'identifiant de l'unité virtuelle à l'unité CPU. Toutes les transactions initiées par l'unité de traitement physique pour le compte de l'unité virtuelle, seront alors marquées avec cet identifiant lors de leur transmission par le réseau NW. Ce mécanisme est totalement transparent pour les unités vituelles CP1-CP4.

L'unité ICU peut être configurée pour envoyer un signal d'interruption à l'unité CPU si le nombre d'interruptions en attente de traitement mémorisées dans l'un des registres S1-S4 non actif dépasse un certain seuil qui peut être ajustable. La réception du signal d'interruption par l'unité CPU provoque l'activation de l'agent TA qui prend ensuite la décision d'activer immédiatement ou non l'unité virtuelle à qui sont destinées les interruptions en attente.

Notamment dans le cas d'un système de traitement temps réel, l'unité ICU peut être également configurée pour attribuer un niveau de priorité à chaque interruption, et pour envoyer un signal d'interruption à l'unité CPU même si l'unité virtuelle CP1-CP4 associée à l'interruption est inactive, lorsque le niveau de priorité de l'interruption dépasse un certain seuil qui peut être ajustable. Ici encore, la réception du signal d'interruption par l'unité CPU provoque l'activation de l'agent TA pour qu'il active l'unité virtuelle CP1-CP4 à qui est destinée l'interruption.

Dans un mode de réalisation, l'agent TA est configuré pour attribuer à chaque unité virtuelle CP1-CP4 des droits d'accès à des ressources du système. Les ressources peuvent être des unités périphériques PRP1-PRP3, et des zones mémoire dans des mémoires. Ainsi, l'agent TA est configuré pour filtrer les accès aux unités PRP1-PRP3, requis par les unités virtuelles CP1-CP4. Si l'une des unités périphériques PRP1-PRP3 est une unité de contrôle de DMA, l'unité de contrôle de DMA peut être configurée pour mémoriser dans une table les identifiants ID1-ID4 des unités virtuelles CP1-CP4 ayant requis un transfert de donnée par bloc, en association avec l'adresse de début et la longueur du bloc de données à transférer, et l'adresse de destination du bloc. Les informations mémorisées dans la table sont transmises dans un message de requête de transfert par une unité virtuelle CP1-CP4 à l'unité de contrôle DMA. Lors d'un transfert de bloc, l'unité de contrôle de DMA transmet l'identifiant de l'unité virtuelle ayant requis le transfert, de sorte qu'il peut être déterminé si les accès à la mémoire pour effectuer le transfert de bloc sont autorisés pour l'unité virtuelle ayant requis le transfert.

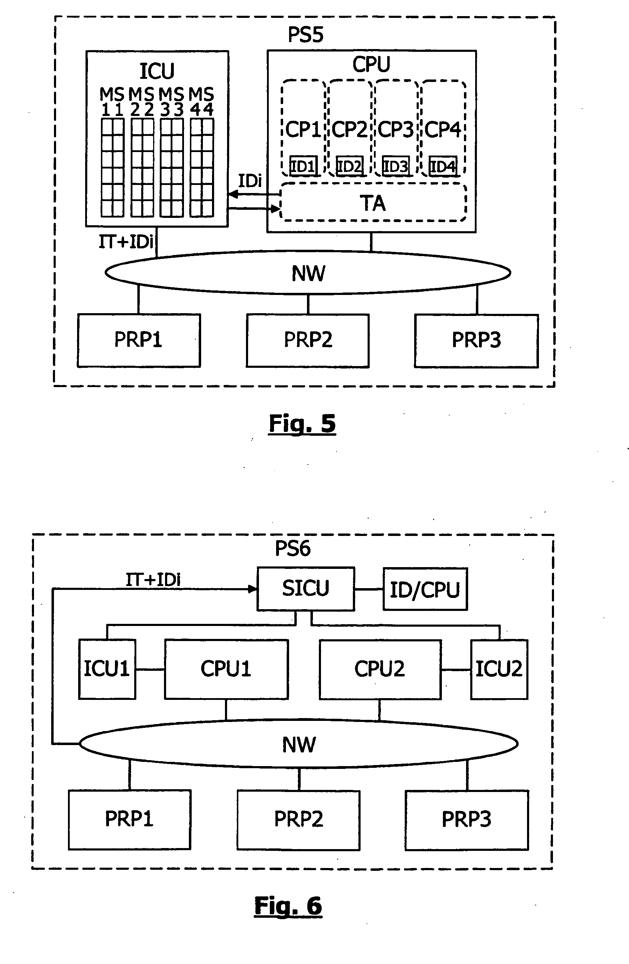

La figure 5 représente un système de traitement de données intégré PS5, selon un autre mode de réalisation. Le système PS5 diffère du système PS4 représenté sur la figure 4 en ce que chaque interruption est transmise sous la forme d'un message d'interruption par le réseau NW entre les unités périphériques PRP1-PRP3 et l'unité ICU. Chaque message d'interruption contient ainsi un identifiant d'interruption associé à un identifiant de l'unité virtuelle destinatrice de l'interruption. Par ailleurs, le réseau NW est configuré pour transmettre des données sous la forme de paquets, pour attribuer différentes qualités de service aux paquets de données qu'il transmet, et pour attribuer aux paquets contenant un message d'interruption une qualité de service maximum pour les transmettre à leurs destinataires dans un délai maximum garanti. A cet effet, le réseau NW peut par exemple être configuré pour créer des canaux virtuels de transmission des paquets, et pour attribuer une bande passante à chaque canal virtuel, les canaux virtuels créés pour transmettre les messages d'interruption étant affectés d'une bande passante maximum. Le réseau NW peut également être configuré pour garantir un délai de transmission maximum à certains paquets et notamment les paquets de transmission des messages d'interruption. A la réception d'un message d'interruption, l'unité ICU détermine le registre S1-S4, puis la cellule du registre déterminé où doit être mémorisée l'interruption, en fonction des identifiants d'unité virtuelle ID1 et d'interruption IT transmis dans le message d'interruption.

La figure 6 représente un système de traitement de données intégré PS6, selon un autre mode de réalisation. Le système PS6 diffère du système PS5 représenté sur la figure 5 en ce qu'il comprend deux unités de traitement physiques CPU1, CPU2, chaque unité de traitement étant connectée à une unité de contrôle d'interruption ICU1, ICU2 respective. Pour acheminer chaque message d'interruption vers l'unité de traitement CPU1, CPU2 où est exécutée l'unité virtuelle CP1-CP4 destinatrice de l'interruption, le système PS6 comprend également une unité de contrôle d'interruption partagée et configurable SICU interconnectée entre le réseau NW et les deux unités ICU1 et ICU2. L'unité SICU dispose d'un accès à des données indiquant pour chaque unité virtuelle CP1-CP4, l'unité de traitement CPU1, CPU2 qui exécute l'unité virtuelle. L'unité SICU peut ainsi acheminer chaque interruption vers l'unité physique CPU1, CPU2 exécutant l'unité virtuelle CP1-CP4 destinatrice de l'interruption.

Il est à noter que dans le système PS6, les interruptions peuvent être transmises entre les unités périphériques PRP1-PRP3 et l'unité SICU soit par un réseau spécifique comme illustré par la figure 4, soit par le réseau NW comme illustré par la figure 5.

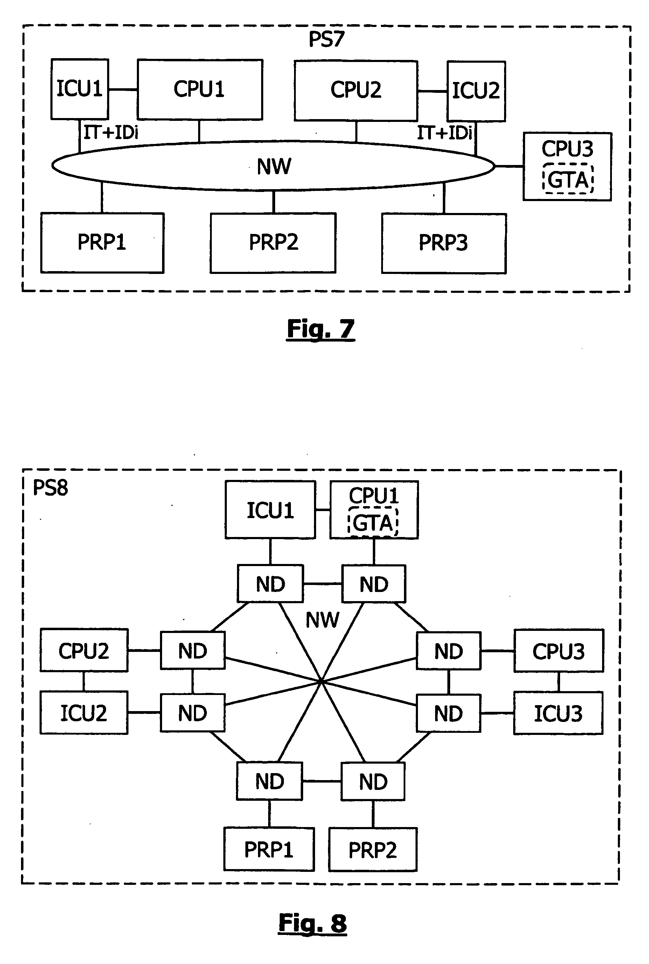

La figure 7 représente un système de traitement de données intégré PS7, selon un autre mode de réalisation. Le système PS7 diffère du système PS6 représenté sur la figure 6 en ce qu'il ne comprend pas d'unité SICU, mais un agent global GTA par exemple mis en oeuvre par une unité de traitement physique CPU3 connectée au réseau NW. L'agent GTA gère les unités virtuelles CP1-CP4 susceptibles d'être exécutées dans le système PS7 en leur attribuant un identifiant unique et en les activant sur l'une ou l'autre des unités de traitement physiques CPU1, CPU2. Ainsi, lorsqu'une interruption est transmise par le réseau NW en association avec un identifiant IDi d'unité virtuelle, elle est acheminée à l'unité ICU1, ICU2 de l'unité de traitement physique CPU1, CPU2 exécutant l'unité virtuelle CP1-CP4 correspondant à l'identifiant IDi.

La figure 8 représente schématiquement un système de traitement de données intégré PS8, selon un autre mode de réalisation. Le système PS8 diffère du système PS7 en ce qu'il comprend plusieurs unités de traitement physiques CPU1-CPU3 et plusieurs unités périphériques PRP1, PRP2, chacune des unités CPU1-CPU3 étant couplée à une unité de contrôle d'interruption respective ICU1-ICU3. Les unités de traitement CPU1-CPU3, les unités ICU1-ICU3 et les unités périphériques PRP1, PRP2, sont chacune connectées au réseau NW par l'intermédiaire d'un routeur ND. L'une des unités de traitement, par exemple l'unité CPU1 met en oeuvre un agent global GTA tel que celui de la figure 7, chaque unité de traitement mettant en oeuvre un agent local TA.

Afin d'offrir une qualité de service suffisante pour pouvoir transmettre des interruptions, le réseau NW peut être du type décrit dans le document "Spidergon: a novel on-chip communication network", Coppola, M.; Locatelli, R.; Maruccia, G.; Pieralisi, L.; Scandurra, A. System-on-Chip, 2004. Proceedings. 2004 International Symposium, 16-18 Nov. 2004, Page(s): 15-, ou du type DSPIN décrit dans le document "A Low Cost Network-on-Chip with Guaranteed Service Well Suited to the GALS Approach", Ivan Miro Panades, Alain Greiner, Abbas Sheibanyrad, 2006. Le réseau DSPIN présente l'avantage de mettre en oeuvre un réseau à latence bornée et à bande passante minimale pour transmettre les interruptions et un réseau pour transmettre des paquets non prioritaires.

Il apparaîtra clairement à l'homme de l'art que la présente invention est susceptible de diverses variantes de réalisation et d'applications. En particulier, les identifiants d'unités virtuelles transmis avec les interruptions ne sont pas nécessairement associés aux interruptions par les unités périphériques. En effet, cette association peut être effectuée par un circuit d'interface de connexion au système de l'unité périphérique. Dans l'exemple du système PS8 de la figure 8, cette association peut par exemple être effectuée par le routeur ND de connexion de l'unité périphérique au réseau NW.

Par ailleurs, le registre de masquage peut être optionnel. Dans certaines applications, il peut ne pas être nécessaire de masquer certaines interruptions en fonction du contenu d'un registre de masquage.

## Revendications

1. Procédé de traitement d'une interruption comprenant des étapes de :
émission d'une interruption (IT) par une unité périphérique (PRP1-PRP3), l'interruption étant destinée à une unité virtuelle parmi plusieurs unités virtuelles (CP1-CP4) exécutées par une unité de traitement physique (CPU),
transmission de l'interruption à une unité de contrôle d'interruption (ICU) couplée à l'unité de traitement physique, et
mémorisation de l'interruption par l'unité de contrôle d'interruption dans un registre d'interruption,
**caractérisé en ce que** l'interruption (IT) est transmise à l'unité de contrôle d'interruption (ICU) en association avec un identifiant (IDi) de l'unité virtuelle (CP1-CP4) destinatrice de l'interruption, le registre d'interruption étant associé à l'identifiant et appartenant à un ensemble de registres (S1-S4) comprenant un registre d'interruption par identifiant d'unité virtuelle susceptible d'être exécutée par l'unité de traitement physique (CPU), l'interruption étant transmise à l'unité de traitement si l'unité virtuelle destinatrice de l'interruption est en cours d'exécution par l'unité de traitement physique.

2. Procédé selon la revendication 1, dans lequel la transmission de l'interruption (IT) vers l'unité de contrôle d'interruption (ICU) est effectuée par l'intermédiaire d'un réseau (NW) transmettant des données sous forme de paquets entre l'unité de traitement physique (CPU) et les unités périphériques (PRP1-PRP3), dans un paquet contenant un identifiant de l'interruption et un identifiant d'unité virtuelle (ID1-ID4), qui est transmis avec une qualité de service maximum.

3. Procédé selon la revendication 1 ou 2, dans lequel l'interruption (IT) est transmise à l'unité de traitement physique (CPU) si elle n'est pas masquée par un registre de masque d'interruption (M1-M4) associé au registre d'interruption (S1-S4) de l'unité virtuelle (CP1-CP4) destinatrice de l'interruption.

4. Procédé selon l'une des revendications 1 à 3, dans lequel l'interruption (IT) est transmise à l'unité de traitement physique (CPU) si l'unité virtuelle (CP1-CP4) destinatrice de l'interruption n'est pas en cours d'exécution par l'unité de traitement physique, mais si le nombre d'interruptions mémorisées dans le registre d'interruption (S1-S4) associé à l'unité virtuelle destinatrice dépasse un certain seuil.

5. Procédé selon l'une des revendications 1 à 4, dans lequel l'interruption (IT) est transmise à l'unité de traitement physique (CPU) si l'unité virtuelle (CP1-CP4) destinatrice de l'interruption n'est pas en cours d'exécution par l'unité de traitement physique, mais si une priorité attribuée à l'interruption dépasse un certain seuil.

6. Procédé selon l'une des revendications 1 à 5, dans lequel la transmission de l'interruption (IT) à une unité de contrôle d'interruption (ICU1, UC2) couplée à une unité de traitement physique, comprend des étapes de détermination de l'unité de traitement physique où est exécutée l'unité virtuelle (CP1-CP4) destinatrice de l'interruption, parmi plusieurs unités de traitement physiques (CPU1, CPU2), en fonction de l'identifiant d'unité virtuelle (IDI) transmis en association avec l'interruption, l'interruption étant transmise à une unité de contrôle d'interruption couplée à l'unité de traitement physique déterminée.

7. Procédé selon l'une des revendications 1 à 6, comprenant des étapes de notification par l'unité de traitement physique (CPU) à l'unité de contrôle d'interruption (ICU) qu'une unité virtuelle (CP1-CP4) a été activée, et de fourniture par l'unité de contrôle d'interruption à l'unité de traitement physique des interruptions mémorisées dans le registre d'interruption pour l'unité virtuelle activée.

8. Système de traitement de données comprenant une unité de traitement physique (CPU) couplée à une unité de contrôle d'interruption (ICU), et des unités périphériques (PRP1-PRP3) reliées à l'unité de traitement physique par un réseau de transmission (NW), les unités périphériques étant configurées pour envoyer à l'unité de contrôle d'interruption, une interruption (IT) destinée à une unité virtuelle parmi plusieurs unités virtuelles (CP1-CP4) exécutées par l'unité de traitement physique (CPU), l'unité de contrôle d'interruption étant configurée pour mémoriser chaque interruption reçue dans un registre d'interruption, et pour transmettre chaque interruption reçue à l'unité de traitement physique,
**caractérisé en ce que** l'unité de contrôle d'interruption (ICU) est configurée pour :
recevoir des interruptions (IT) en association avec un identifiant (IDi) d'unité virtuelle (CP1-CP4) destinatrice de l'interruption,
mémoriser chaque interruption reçue dans un registre d'interruption correspondant à l'identifiant associé et appartenant à un ensemble de registres (S1-S4) comprenant un registre d'interruption par unité virtuelle susceptible d'être exécutée par l'unité de traitement physique (CPU), et
transmettre chaque interruption à l'unité de traitement physique si l'unité virtuelle destinatrice de l'interruption est en cours d'exécution par l'unité de traitement physique.

9. Système selon la revendication 8, dans lequel le réseau (NW) est configuré pour transmettre des données sous forme de paquets avec une qualité de service ajustable, l'unité de contrôle d'interruption (ICU) étant configurée pour recevoir chaque interruption dans un paquet contenant un identifiant de l'interruption et un identifiant d'unité virtuelle (ID1-ID4), transmis par le réseau (NW) avec une qualité de service maximum.

10. Système selon l'une des revendications 8 à 9, dans lequel l'unité de contrôle d'interruption (ICU) est configurée pour transmettre une interruption (IT) à l'unité de traitement physique (CPU) si elle n'est pas masquée par un registre de masque d'interruption (M1-M4) associé au registre d'interruption (S1-S4) de l'unité virtuelle (CP1-CP4) destinatrice de l'interruption.

11. Système selon l'une des revendications 8 à 10, dans lequel l'unité de contrôle d'interruption (ICU) est configurée pour transmettre une interruption (IT) à l'unité de traitement physique (CPU) si l'unité virtuelle (CP1-CP4) destinatrice de l'interruption n'est pas en cours d'exécution par l'unité de traitement physique, mais si le nombre d'interruptions mémorisées dans le registre d'interruption (S1-S4) associé à l'unité virtuelle destinatrice dépasse un certain seuil.

12. Système selon l'une des revendications 8 à 11, dans lequel l'unité de contrôle d'interruption (ICU) est configurée pour transmettre une interruption (IT) à l'unité de traitement physique (CPU) si l'unité virtuelle (CP1-CP4) destinatrice de l'interruption n'est pas en cours d'exécution par l'unité de traitement physique, mais si une priorité attribuée à l'interruption dépasse une certain seuil.

13. Système selon l'une des revendications 8 à 12, comprenant plusieurs unités de traitement physiques (CPU1, CPU2) couplées chacune à une unité de contrôle d'interruption (ICU1, UC2), le réseau étant configuré pour acheminer une interruption vers l'unité de contrôle d'interruption en fonction de l'identifiant d'unité virtuelle (IDi) transmis en association avec l'interruption.

14. Système selon l'une des revendications 8 à 13, dans lequel chaque unité de traitement (CPU, CPU1, CPU2) est configurée pour notifier l'activation d'une unité virtuelle (CP1-CP4) à l'unité de contrôle d'interruption (ICU, 1CU1, UC2) à laquelle elle est couplée.

## Claims

1. A method of processing an interruption comprising steps of:
a peripheral unit (PRP1-PRP3) sending an interruption (IT), the interruption being intended for a virtual unit out of several virtual units (CP1-CP4) executed by a physical processing unit (CPU),
transmitting the interruption to an interrupt control unit (ICU) coupled to the physical processing unit, and
the interrupt control unit storing the interruption in an interrupt register,
**characterized in that** the interruption (IT) is transmitted to the interrupt control unit (ICU) in association with an identifier (IDi) of the virtual unit (CP1-CP4) receiving the interruption, the interrupt register being associated with the identifier and belonging to a set of registers (S1-S4) comprising one interrupt register per virtual unit identifier likely to be executed by the physical processing unit (CPU), the interruption being transmitted to the processing unit if the virtual unit receiving the interruption is being executed by the physical processing unit.

2. Method according to claim 1, wherein the interruption (IT) is transmitted to the interrupt control unit (ICU) through a network (NW) transmitting data in the form of packets between the physical processing unit (CPU) and the peripheral units (PRP1-PRP3), in a packet containing an identifier of the interruption and a virtual unit identifier (ID1-ID4), which is transmitted with a maximum quality of service.

3. Method according to claim 1 or 2, wherein the interruption (IT) is transmitted to the physical processing unit (CPU) if it is not masked by an interrupt mask register (M1-M4) associated with the interrupt register (S1-S4) of the virtual unit (CP1-CP4) receiving the interruption.

4. Method according to one of claims 1 to 3, wherein the interruption (IT) is transmitted to the physical processing unit (CPU) if the virtual unit (CP1-CP4) receiving the interruption is not being executed by the physical processing unit, but if the number of interruptions stored in the interrupt register (S1-S4) associated with the receiving virtual unit exceeds a certain threshold.

5. Method according to one of claims 1 to 4, wherein the interruption (IT) is transmitted to the physical processing unit (CPU) if the virtual unit (CP1-CP4) receiving the interruption is not being executed by the physical processing unit, but if a priority granted to the interruption exceeds a certain threshold.

6. Method according to one of claims 1 to 5, wherein the transmission of the interruption (IT) to an interrupt control unit (ICU1, UC2) coupled to a physical processing unit, comprises steps of determining the physical processing unit in which the virtual unit (CP1-CP4) receiving the interruption is executed, out of several physical processing units (CPU1, CPU2), depending on the virtual unit identifier (IDi) transmitted in association with the interruption, the interruption being transmitted to an interrupt control unit coupled to the determined physical processing unit.

7. Method according to one of claims 1 to 6, comprising steps of the physical processing unit (CPU) notifying the interrupt control unit (ICU) that a virtual unit (CP1-CP4) has been activated, and of the interrupt control unit supplying the physical processing unit with the interruptions stored in the interrupt register for the activated virtual unit.

8. A data processing system comprising a physical processing unit (CPU) coupled to an interrupt control unit (ICU), and peripheral units (PRP1-PRP3) linked to the physical processing unit by a transmission network (NW), the peripheral units being configured for sending the interrupt control unit an interruption (IT) intended for a virtual unit out of several virtual units (CP1-CP4) executed by the physical processing unit (CPU), the interrupt control unit being configured for storing each interruption received in an interrupt register, and for transmitting each interruption received to the physical processing unit,
**characterized in that** the interrupt control unit (ICU) is configured for:
receiving interruptions (IT) in association with an identifier (IDi) of a virtual unit (CP1-CP4) receiving the interruption,
storing each interruption received in an interrupt register corresponding to the associated identifier and belonging to a set of registers (S1-S4) comprising one interrupt register per virtual unit likely to be executed by the physical processing unit (CPU), and
transmitting each interruption to the physical processing unit if the virtual unit receiving the interruption is being executed by the physical processing unit.

9. System according to claim 8, wherein the network (NW) is configured for transmitting data in the form of packets with an adjustable quality of service, the interrupt control unit (ICU) being configured for receiving each interruption in a packet containing an identifier of the interruption and a virtual unit identifier (ID1-ID4), transmitted through the network (NW) with a maximum quality of service.

10. System according to one of claims 8 to 9, wherein the interrupt control unit (ICU) is configured for transmitting an interruption (IT) to the physical processing unit (CPU) if it is not masked by an interrupt mask register (M1-M4) associated with the interrupt register (S1-S4) of the virtual unit (CP1-CP4) receiving the interruption.

11. System according to one of claims 8 to 10, wherein the interrupt control unit (ICU) is configured for transmitting an interruption (IT) to the physical processing unit (CPU) if the virtual unit (CP1-CP4) receiving the interruption is not being executed by the physical processing unit, but if the number of interruptions stored in the interruption register (S1-S4) associated with the receiving virtual unit exceeds a certain threshold.

12. System according to one of claims 8 to 11, wherein the interrupt control unit (ICU) is configured for transmitting an interruption (IT) to the physical processing unit (CPU) if the virtual unit (CP1-CP4) receiving the interruption is not being executed by the physical processing unit, but if a priority granted to the interruption exceeds a certain threshold.

13. System according to one of claims 8 to 12, comprising several physical processing units (CPU1, CPU2) each coupled to an interrupt control unit (ICU1, UC2), the network being configured for routing an interruption to the interrupt control unit depending on the virtual unit identifier (IDi) transmitted in association with the interruption.

14. System according to one of claims 8 to 13, wherein each processing unit (CPU, CPU1, CPU2) is configured for notifying the activation of a virtual unit (CP1-CP4) to the interrupt control unit (ICU, ICU1, UC2) to which it is coupled.

## Patentansprüche

1. Verfahren zur Verarbeitung einer Unterbrechung, umfassend die folgenden Schritte:
Senden einer Unterbrechung (IT) durch ein Peripheriegerät (PRP1-PRP3), wobei die Unterbrechung für eine virtuelle Einheit bestimmt ist, aus mehreren durch eine physikalische Verarbeitungseinheit (CPU) ausgeführten virtuellen Einheiten (CP1-CP4),
Übertragen der Unterbrechung auf eine Unterbrechungssteuereinheit (ICU), die an der physikalische Verarbeitungseinheit angekoppelt ist, und
Speichern der Unterbrechung in einem Unterbrechungsregister durch die Unterbrechungssteuereinheit,
**dadurch gekennzeichnet, dass** die Unterbrechung (IT), in Assoziation mit einem Bezeichner (IDi) der für die Unterbrechung bestimmten virtuellen Einheit (CP1-CP4), auf die Unterbrechungssteuereinheit (ICU) übertragen wird, wobei das Unterbrechungsregister mit dem Bezeichner assoziiert ist und einer Registergruppe (S1-S4) gehört, die ein Unterbrechungsregister per Bezeichner einer durch die physikalische Verarbeitungseinheit (CPU) ausführungsfähigen virtuellen Einheit umfasst, wobei die Unterbrechung auf die Verarbeitungseinheit übertragen wird, wenn die für die Unterbrechung bestimmte virtuelle Einheit zur selben Zeit durch die physikalische Verarbeitungseinheit ausgeführt wird.

2. Verfahren nach Anspruch 1, bei dem die Übertragung der Unterbrechung (IT) zu der Unterbrechungssteuereinheit (ICU) durch ein Netz (NW) erfolgt, das Daten in Form von Paketen zwischen der physikalischen Verarbeitungseinheit (CPU) und den Peripheriegeräten (PRP1-PRP3) überträgt, in einem Paket, das einen Unterbrechungsbezeichner und einen Bezeichner (ID1-1D4) einer virtuellen Einheit enthält und mit einer maximalen Dienstqualität übertragen wird.

3. Verfahren nach Anspruch 1 oder 2, bei dem die Unterbrechung (IT) auf die physikalische Verarbeitungseinheit (CPU) übertragen wird, wenn sie nicht durch ein Unterbrechungsmaskierungsregister (M1-M4) maskiert ist, das mit dem Unterbrechungsregister (S1-S4) der für die Unterbrechung bestimmten virtuellen Einheit (CP1-CP4) assoziiert ist.

4. Verfahren nach einem der Ansprüche 1 bis 3, bei dem die Unterbrechung (IT) auf die physikalische Verarbeitungseinheit (CPU) übertragen wird, wenn die für die Unterbrechung bestimmte virtuelle Einheit (CP1-CP4) zur selben Zeit nicht durch die physikalische Verarbeitungseinheit ausgeführt wird, aber wenn die Zahl der in dem mit der für die Unterbrechung bestimmten virtuellen Einheit assoziierten Unterbrechungsregister (S1-S4) gespeicherten Unterbrechungen eine gewisse Schwelle übersteigt.

5. Verfahren nach einem der Ansprüche 1 bis 4, bei dem die Unterbrechung (IT) auf die physikalische Verarbeitungseinheit (CPU) übertragen wird, wenn die für die Unterbrechung bestimmte virtuelle Einheit (CP1-CP4) zur selben Zeit nicht durch die physikalische Verarbeitungseinheit ausgeführt wird, aber wenn eine der Unterbrechung zugeordnete Priorität eine gewisse Schwelle übersteigt.

6. Verfahren nach einem der Ansprüche 1 bis 5, bei dem die Übertragung der Unterbrechung (IT) auf eine an einer physikalischen Verarbeitungseinheit angekoppelten Unterbrechungssteuereinheit (ICU1, UC2) Schritte der Bestimmung der physikalische Verarbeitungseinheit umfasst, wo die für die Unterbrechung bestimmte virtuelle Einheit (CP1-CP4) ausgeführt wird, aus mehreren physikalischen Verarbeitungseinheiten (CPU1, CPU2), abhängig von dem in Assoziation mit der Unterbrechung übertragenen Bezeichner (IDi) einer virtuellen Einheit, wobei die Unterbrechung auf eine an der bestimmten physikalischen Verarbeitungseinheit angekoppelten Unterbrechungssteuereinheit übertragen wird.

7. Verfahren nach einem der Ansprüche 1 bis 6, umfassend Schritte der Meldung durch die physikalische Verarbeitungseinheit (CPU) an die Unterbrechungssteuereinheit (ICU), dass eine virtuelle Einheit (CP1-CP4) aktiviert wurde, und der Lieferung der im Unterbrechungsregister für die aktivierte virtuelle Einheit gespeicherten Unterbrechungen durch die Unterbrechungssteuereinheit an die physikalische Verarbeitungseinheit.

8. Datenverarbeitungssystem, umfassend eine an einer Unterbrechungssteuereinheit (ICU) angekoppelte physikalische Verarbeitungseinheit (CPU), und Peripheriegeräte (PRP1-PRP3), die mit der physikalischen Verarbeitungseinheit durch ein Übertragungsnetz (NW) verbunden sind, wobei die Peripheriegeräte dafür konfiguriert sind, eine für eine virtuelle Einheit bestimmte Unterbrechung (IT) der Unterbrechungssteuereinheit zu senden, aus mehreren durch die physikalische Verarbeitungseinheit (CPU) ausgeführten virtuellen Einheiten (CP1-CP4), wobei die Unterbrechungssteuereinheit dafür konfiguriert ist, jede empfangene Unterbrechung in einem Unterbrechungsregister zu speichern, und jede empfangene Unterbrechung auf die physikalische Verarbeitungseinheit zu übertragen,
**dadurch gekennzeichnet, dass** die Unterbrechungssteuereinheit (ICU) dafür konfiguriert ist, Unterbrechungen (IT) in Assoziation mit einem Bezeichner (IDi) einer für die Unterbrechung bestimmten virtuellen Einheit (CP1-CP4) zu empfangen,
jede empfangene Unterbrechung in einem Unterbrechungsregister zu speichern, das dem assoziierten Bezeichner entspricht und einer Registergruppe (S1-S4) gehört, die ein Unterbrechungsregister per durch die physikalische Verarbeitungseinheit (CPU) ausführfähige virtuelle Einheit umfasst, und
jede Unterbrechung auf die physikalische Verarbeitungseinheit zu übertragen, wenn die für die Unterbrechung bestimmte virtuelle Einheit zur selben Zeit durch die physikalische Verarbeitungseinheit ausgeführt wird.

9. System nach Anspruch 8, bei dem das Netz (NW) dafür konfiguriert ist, Daten in Form von Paketen mit einer einstellbaren Dienstqualität zu übertragen, wobei die Unterbrechungssteuereinheit (ICU) dafür konfiguriert ist, jede Unterbrechung in einem einen Unterbrechungsbezeichner und einen Bezeichner (ID1-1D4) einer virtuellen Einheit enthaltenden Paket zu empfangen, das über das Netz (NW) mit einer maximalen Dienstqualität übertragen wird.

10. System nach einem der Ansprüche 8 bis 9, bei dem die Unterbrechungssteuereinheit (ICU) dafür konfiguriert ist, eine Unterbrechung (IT) auf die physikalische Verarbeitungseinheit (CPU) zu übertragen, wenn sie nicht durch ein mit dem Unterbrechungsregister (S1-S4) der für die Unterbrechung bestimmten virtuellen Einheit (CP1-CP4) assoziierten Unterbrechungsmaskierungs-register (M1-M4) maskiert ist.

11. System nach einem der Ansprüche 8 bis 10, bei dem die Unterbrechungssteuereinheit (ICU) dafür konfiguriert ist, eine Unterbrechung (IT) auf die physikalische Verarbeitungseinheit (CPU) zu übertragen, wenn die für die Unterbrechung bestimmte virtuelle Einheit (CP1-CP4) zur selben Zeit nicht durch die physikalische Verarbeitungseinheit ausgeführt ist, aber wenn die Zahl der in dem mit der für die Unterbrechung bestimmten virtuellen Einheit assoziierten Unterbrechungsregister (S1-S4) gespeicherten Unterbrechungen eine gewisse Schwelle übersteigt.

12. System nach einem der Ansprüche 8 bis 11, bei dem die Unterbrechungssteuereinheit (ICU) dafür konfiguriert ist, eine Unterbrechung (IT) auf die physikalische Verarbeitungseinheit (CPU) zu übertragen, wenn die für die Unterbrechung bestimmte virtuelle Einheit (CP1-CP4) zur selben Zeit nicht durch die physikalische Verarbeitungseinheit ausgeführt wird, aber wenn eine der Unterbrechung zugeordnete Priorität eine gewisse Schwelle übersteigt.

13. System nach einem der Ansprüche 8 bis 12, mehrere physikalische Verarbeitungseinheiten (CPU1, CPU2) umfassend, von denen jede an einer Unterbrechungssteuereinheit (ICU1, UC2) angekoppelt ist, wobei das Netz dafür konfiguriert ist, eine Unterbrechung abhängig von dem in Assoziation mit der Unterbrechung übertragenen Bezeichner (IDi) einer virtuellen Einheit zur Unterbrechungssteuereinheit zuzuführen.

14. System nach einem der Ansprüche 8 bis 13, bei dem jede Verarbeitungseinheit (CPU, CPU1, CPU2) dafür konfiguriert ist, der Unterbrechungssteuereinheit (ICU, ICU1, UC2), an der sie angekoppelt ist, die Aktivierung einer virtuellen Einheit (CP1-CP4) zu melden.
